# EUROPÄISCHE PATENTSCHRIFT

(11) **EP 1 030 973 B1**
(45) Veröffentlichungstag und Bekanntmachung des Hinweises auf die Patenterteilung: **18.06.2003**
(21) Anmeldenummer: 98961190.0
(22) Anmeldetag: 13.11.1998
(51) Int. Cl.: F04B 53/10

(54) **KOLBENPUMPE**
PISTON PUMP
POMPE A PISTON

(30) Priorität: 14.11.1997 DE 19750458; 17.02.1998 DE 19806528; 06.05.1998 DE 19820136
(43) Veröffentlichungstag der Anmeldung: 30.08.2000
(73) Patentinhaber: Continental Teves AG & Co. oHG, 60488 Frankfurt am Main (DE)
(72) Erfinder: GREIFF, Uwe, D-61352 Bad Homburg (DE); OTTO, Albrecht, D-61137 Schöneck (DE); STEFFES, Helmut, D-65795 Hattersheim (DE)
(86) Internationale Anmeldenummer: EP9807265
(87) Internationale Veröffentlichungsnummer: WO99025978

(56) Entgegenhaltungen:
- DE-A- 3 208 770
- DE-A- 3 742 824
- DE-A- 4 407 978
- DE-B- 1 165 364
- FR-A- 1 486 776
- US-A- 4 032 263
- US-A- 4 551 077
- US-A- 4 878 815

## Beschreibung

Die vorliegende Erfindung bezieht sich auf eine Kolbenpumpe, insbesondere zur Verwendung in hydraulischen, schlupfgeregelten Bremsanlagen, gemäß dem Oberbegriff des Patentanspruchs 1.

Eine Kolbenpumpe ist beispielsweise aus der EP 0 631 050 B1 bekannt. Die Kolbenpumpe gemäß diesem Stand der Technik weist ein Druckventil und ein Saugventil auf, die beide örtlich und baulich voneinander getrennt, in einem Pumpengehäuse angeordnet sind. Die bekannten Druck- und Saugventile werden zudem zeitlich nacheinander in das Pumpengehäuse eingebaut und können im eingebauten Zustand nicht mehr ohne größeren Aufwand geprüft werden. Aber auch vor dem Einbau ist eine optimale Prüfung der Ventile nur schwer möglich, da in diesem Fall die Verhältnisse im eingebauten Zustand möglichst genau simuliert werden müßten und die Ventile nur getrennt geprüft werden könnten.

Aus der Auslegeschrift DE 1 165 364 ist eine Kolbenpumpe bekannt. Diese verfügt über eine Ventilanordnung mit einem Druckventilkörper und einem Saugventilkörper, welche axial an einem, als Ventilgehäuse ausgebildeten, Bauelement angeordnet sind. Das Ventilgehäuse ist in einem Pumpengehäuse befestigt. Der Raumbedarf dieser Kolbenpumpe ist verbesserungswürdig.

Die US 4,878,815 zeigt eine Kolbenpumpe mit Druck- und Saugventil, welche an einem eigenständig handhabbaren Bauelement in Form eines Ventilträgers angeordnet sind. Die beiden Ventile sind radial im Abstand sowie konzentrisch zueinander und ferner konzentrisch zu einem Kolben vorgesehen. Der Ventilträger ist verschiebbar in einer Bohrung eines Pumpengehäuse aufgenommen, und kann zu Wartungszwecken einfach aus der Bohrung herausgezogen werden.

Die Aufgabe der vorliegenden Erfindung besteht darin, die Nachteile des Standes der Technik zu vermeiden, und insbesondere eine raumsparende Kolbenpumpe zu schaffen, bei der sowohl das Druckventil als auch das Saugventil vor dem Einbau in ein Pumpengehäuse, d. h. extern, vormontiert und geprüft werden können.

Diese Aufgabe wird bei einer Kolbenpumpe durch die Merkmale des Patentanspruchs 1 gelöst.

Ein wesentlicher Vorteil der vorliegenden Erfindung besteht darin, daß durch die erfindungsgemäße Ausbildung des Druckventils und des Saugventils eine extern vormontierbare und prüfbare Ventilpatroneneinheit geschaffen wird. Außerdem können die Anzahl der verwendeten Teile sowie der Ausschuß von mangelhaften Einheiten und damit die Herstellungskosten gesenkt werden. Ferner ist bei der Erfindung vorteilhaft, daß die Zeit für die Montage der erfindungsgemäßen Kolbenpumpe beträchtlich reduziert wird, wodurch die Kosten ebenfalls gesenkt werden. Durch die bauliche Zusammenfassung von Druckund Saugventil ergibt sich überdies sowohl eine Raumersparnis als auch eine optimale Ausnutzung des in dem Pumpengehäuse für die Ventile verfügbaren Raumes. Schließlich gestattet die bauliche Zusammenfassung von Druck- und Saugventil eine einfache Verbohrung des Ventilsitzkörpers, da keine separaten Ventile in dem Pumpenkörper untergebracht werden müssen. Das Saugventil ist beispielsweise auf der Stirnseite des Ventilsitzkörpers im wesentlichen axial und das Druckventil im wesentlichen radial zur Mittelachse des Ventilsitzkörpers angeordnet. Diese Anordnung ist besonders platzsparend, da der Pumpkolben mit seiner Rückstellfeder in die freigedrehte Ausnehmung eintauchen kann, wodurch die Länge der Laufbohrung des Pumpkolbens verkürzt wird.

In einer bevorzugten Ausführungsform der Erfindung ist das Bauelement in dem Pumpengehäuse durch Verstemmung oder Verclinchung befestigt. Diese Art der Befestigung ist kostengünstig und ermöglicht einen druckdichten Einbau des Bauelements in dem Pumpengehäuse. Ferner werden dadurch Möglichkeiten einer Manipulation der Bremsanlage durch Unbefugte eingeschränkt.

Vorteilhafterweise weist das Bauelement einen Ventilsitzkörper auf, in dem ein Ventilsitz für das Druckventil und ein Ventilsitz für das Saugventil ausgebildet ist. Dadurch ergibt sich eine besonders bauraum- und materialsparende Ausbildung des Bauelelements der erfindungsgemäßen Kolbenpumpe.

Gemäß einer weiteren Ausführungsform der Erfindung weist die Kolbenpumpe einen als Topfkolben ausgebildeten Pumpkolben auf, wobei das Bauelement einen axial hervorragenden Dornabschnitt aufweist, durch den der Topfkolben geführt ist. Ein Vorteil dieser Ausführungsform besteht darin, daß das Pumpengehäuse nicht mehr gehärtet bzw. eloxiert werden muß.

Vorteilhafterweise weist das Bauelement einen Ventilsitzkörper mit einer auf dessen einer Stirnseite ausgebildeten, axialen Ausnehmung auf, in welcher der Pumpkolben der Kolbenpumpe geführt ist bzw. eintaucht.

Gemäß einer Variante der Erfindung weist das Saugventil eine Druckfeder auf, die mit einem Federtopf gesichert ist, wobei der Federtopf einen daran ausgebildeten Anschlag für den Ventilkörper des Saugventils aufweist, und wobei der Federtopf ferner Mittel zur Führung der Druckfeder und Mittel zur Führung einer, zur Rückstellung des Kolbens dienenden Kolbenrückstellfeder aufweist. Der Federtopf vereint daher mehrere, unterschiedliche Funktionen, was eine Platz- und Materialersparnis bedeutet. Ferner wird durch die Ausbildung des Anschlags für den Saugventilkörper ein Festklemmen des Saugventilkörpers im Federtopf verhindert.

Vorteilhafterweise sind die Mittel zur Führung der Druckfeder und Mittel zur Führung der Kolbenrückstellfeder ein topfartiger Abschnitt des Federtopfs, wobei an der Innenseite des topfartigen Abschnitts die Druckfeder und an der Außenseite des topfartigen Abschnitts die Kolbenrückstellfeder geführt ist. Der Anschlag des Federtopfes dient dabei vorzugsweise als innere Führung der Druckfeder. Dies ist besonders vorteilhaft, weil der Federtopf aufgrund seiner Funktion als Haltekäfig für den Saugventilkörper ohnehin im wesentlichen konkav, d. h. mit einem topfartigen Abschnitt versehen, ist, und ferner weil der Federtopf ohnehin vorzugsweise einen Anschlag aufweist, um ein Festklemmen des Saugventilschließkörpers im Federtopf zu verhindern.

Erfindungsgemäß ist desweiteren ein Druckventil mit einem Ventilsitzkörper, insbesondere für eine Kolbenpumpe vorgesehen, wobei ein Ventilkörper des Druckventils durch ein, an dem Ventilsitzkörper befestigbares Klammerelement gegen einen, im Ventilsitzkörper ausgebildeten Ventilsitz vorgespannt ist, und wobei das Klammerelement mit besonderem Vorteil eine daran ausgebildete Zunge aufweist, die den Ventilkörper gegen den Ventilsitz vorspannt. Die Verwendung der erfindungsgemäßen Zunge anstatt beispielsweise einer Schraubenfeder ist deshalb möglich, weil der Öffnungsdruck beim Druckventil nicht so exakt wie beim Saugventil eingestellt werden muß. Daher kann beim Druckventil die Schraubenfeder durch eine am Klammerelement ausgebildete Zunge vorgesehen werden. Durch die Zunge wird der Ventilkörper senkrecht auf den Ventilsitz gedrückt, wobei gleichzeitig der Ventilkörper in axialer und radialer Richtung fixiert wird. Durch eine möglicherweise zusätzlich in der Zunge ausgebildeten Bohrung, in die der Ventilkörper zumindest teilweise eingreift, kann die Fixierung des Ventilkörpers noch verbessert werden. Ferner bietet die Ausbildung der Zunge an dem Klammerelement auch den Vorteil, daß die Federkraft - auch bei vorgegebener Ausbildung des Ventil-körpers - über die Länge der Zunge eingestellt werden kann. Schließlich bietet die Ausbildung der Zunge in dem Klammerelement einen ausreichenden Flächenkontakt zwischen dem Klammerelement und dem Ventilsitzkörper, nämlich durch die an die Zunge angrenzenden Flächen, wodurch das Klammerelement wesentlich besser auf dem Ventilsitzkörper befestigbar ist.

Vorzugsweise weist das Klammerelement eine, zu der Zunge senkrecht ausgebildete Lasche zur Befestigung des Klammerelements an dem Ventilsitzkörper auf. Dadurch kann ein Verdrehen und ein Lösen des Klammerelements weitgehend vermieden werden.

In einer bevorzugten Ausführungsform der Erfindung weist das Klammerelement wenigstens eine, parallel zu der Zunge ausgebildete Lasche zur Befestigung des Klammerelements in einer, zur Aufnahme des Ventilkörpers dienenden Ausnehmung in dem Ventilsitzkörper auf. Dies macht keine gesonderte Bohrung in dem Ventilsitzkörper zur Befestigung der Lasche erforderlich.

Wenn das Klammerelement wesentlich breiter als der Ventilkörper ausgebildet ist, ergibt sich aufgrund der größeren Kontaktfläche zwischen Klammerelement und Ventilsitzkörper eine verbesserte, alleine durch die Spannung des Klammerelements verursachte, Befestigung des Klammerelements auf dem Ventilsitzkörper.

Um das radiale Aufstecken des Klammerelements auf den Ventilsitzkörper zu erleichtern, weist das Klammerelement vorzugsweise an seinen Querseiten nach außen gewölbte Endabschnitte auf. Das Aufstecken kann jedoch auch axial von einem Endabschnitt des Ventilsitzkörpers aus erfolgen.

Die Erfindung sowie weitere Vorteile und Ausgestaltungen derselben wird bzw. werden nachfolgend unter Bezugnahme auf die Zeichnungen erläutert. Dieselben oder ähnliche Bezugszeichen in den Zeichnungen bezeichnen die gleichen oder entsprechende Elemente. Es sei bemerkt, daß in der folgenden Figurenbe-schreibung insbesondere auf die Unterschiede der verschiedenen Ausführungsbeispiele eingegangen wird. Hinsichtlich der Gemeinsamkeiten wird daher im allgemeinen auf zuvor beschriebene Ausführungsbeispiele verwiesen. In den Zeichnungen zeigen:
- Fig. 1: eine Längsschnittansicht einer kolbenpumpe;
- Fig. 2: eine Längsschnittansicht eines ersten Ausführungsbeispiels der vorliegenden Erfindung;
- Fig. 3: eine Längsschnittansicht eines zweiten Ausführungsbeispiels der vorliegenden Erfindung;
- Fig. 4: eine Längsschnittansicht eines dritten Ausführungsbeispiels der vorliegenden Erfindung
- Fig. 5: eine Längsschnittansicht eines vierten Ausführungsbeispiels der vorliegenden Erfindung;
- Fig. 6: eine Längsschnittansicht eines fünften Ausführungsbeispiels der vorliegenden Erfindung;
- Fig. 7: eine Querschnittsansicht eines erfindungsgemäßen Druckventils entlang der Linie VII-VII der Fig. 6;
- Fig. 8: eine Längsschnittsansicht eines sechsten Ausführungsbeispiels der vorliegenden Erfindung;
- Fig. 9: eine Querschnittsansicht einer weiteren Ausführungsform eines erfindungsgemäßen Druckventils entlang der Linie IX-IX der Fig. 8;
- Fig. 12: eine Längsschnittsansicht eines siebten Ausführungsbeispiels der vorliegenden Erfindung;
- Fig. 11: eine Querschnittsansicht einer weiteren Ausführungsform eines erfindungsgemäßen Druckventils entlang der Linie XI-XI der Fig. 10;
- Fig. 12: eine Längsschnittsansicht eines achten Ausführungsbeispiels der vorliegenden Erfindung;
- Fig. 13: eine perspektivische Ansicht einer Halteklammer zur Verwendung am erfindungsgemäßen Druckventil gemäß Fig. 12; und
- Fig. 14: eine Querschnittsansicht entlang der Linie XIV-XIV der Fig. 12 mit einer bevorzugten Ausführungsform eines erfindungsgemäßen Druckventils.

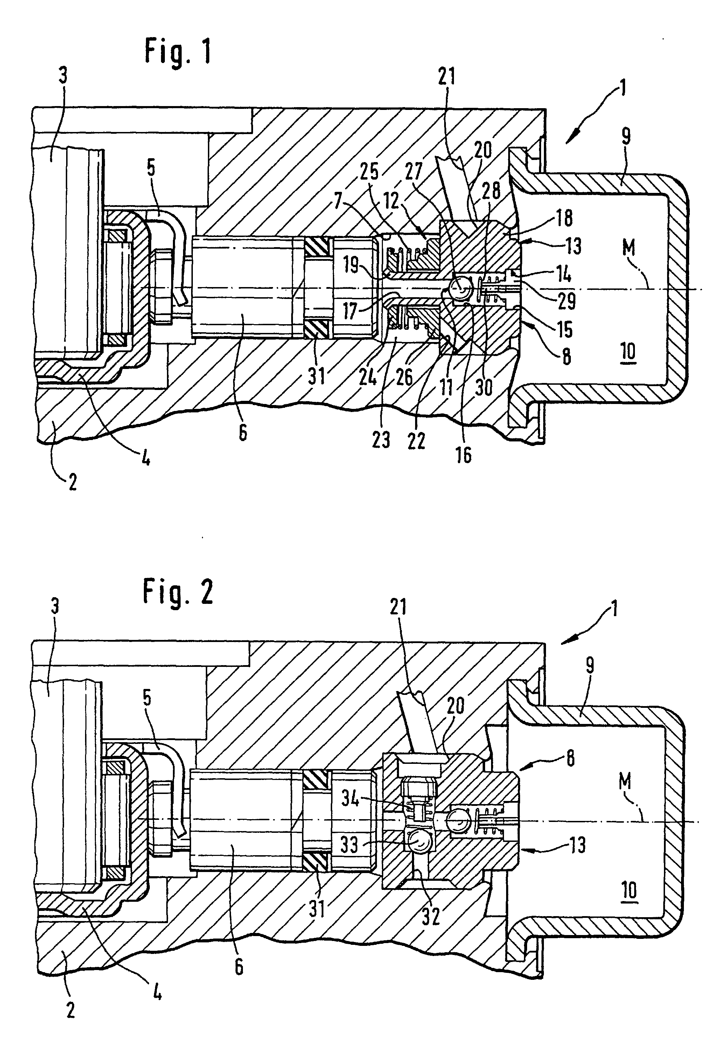

In Fig. 1 ist eine Längsschnittsansicht einer Hydraulik- bzw. Kolbenpumpe 1, die vorzugsweise zur Verwendung in einer ABS (Anti-Blockier-System), ASR (Antriebs-Schlupf-Regelung) oder ESP (Elektronisches Stabilitäts-Programm) -Anlage einer geregelten Fahrzeugbremse dient, dargestellt. Die Hydraulikpumpe 1, die ihrer Bauart nach eine Kolbenpumpe ist, weist in ihrem Gehäuse 2 einen von einer Antriebswelle 3 angetriebenen Exzenter 4 auf. In dieser kolbenpumpe 1 ist ein Pumpenkolben 6 über einen Kuppelring 5 mit einem nicht dargestellten zweiten Pumpenkolben verbunden und so am Exzenter 4 angelegt. Während der Drehung der Antriebswelle 3 wird der Pumpenkolben 6 in einer gestuften Bohrung 7 des Pumpengehäuses 2 linear hin- und herbewegt. Die gestufte Bohrung 7 ist in ihrem dem Exzenter 4 gegenüberliegenden Ende durch ein Bauelement 8, wie beispielsweise eine Patrone, druckdicht verschlossen. Die Patrone 8 ist in dem Pumpengehäuse 2, beispielsweise durch Verstemmung oder Verclinchung befestigt. Außerhalb der Patrone bzw. des Bauelementes 8 bildet ein nach außen gewölbter Deckel 9 eine Druckdämpfungskammer 10. Die Patrone 8 weist ein druckgesteuertes Druckventil 11 und ein druckgesteuertes Saugventil 12 auf. Die Ventilpatrone 8 kann außerhalb des Ventilblocks bzw. des Pumpengehäuses 2 vormontiert und geprüft werden. Das Druckventil 11 weist einen Ventilsitzkörper 13 auf. Der Ventilsitzkörper 13 besitzt eine zentrale Bohrung 14, deren Mittelachse M mit der Längsachse des Pumpenkolbens 6 zusammenfällt. Die zentrale Bohrung 14 des Ventilsitzkörpers 13 weist, von außen nach innen, drei gestufte Abschnitte 15, 16 und 17 auf. Der Durchmesser des äußersten Abschnitts 15 ist dabei größer als der Durchmesser des mittleren Abschnitts 16, wobei letzterer wiederum größer als derjenige des innersten Abschnitts 17 ist. Der Ventilsitzkörper 13 weist einen äußeren Endabschnitt 18 und einen gegenüberliegenden, hülsenförmigen, inneren Endabschnitt 19 auf. In dem Endabschnitt 18 sind die gestuften Abschnitte 15,16 und ein Teil des gestuften Abschnitts 17 der Bohrung 14 ausgebildet. Der hülsenförmige Endabschnitt 19 des Ventilsitzkörpers 13 weist ebenfalls einen Teil des gestuften Abschnitts 17 der Bohrung 14 auf. Der Endabschnitt 18 des Ventilsitzkörpers 13 besitzt einen, entlang seinem Außenumfang ausgebildeten Ringkanal 20, der über eine schematisch angedeutete Bohrung 21 zu einem nicht dargestellten Niederdruckspeicher führt. Eine schräg zur Achse M laufende Bohrung 22 verbindet den Ringkanal 20 bei geöffnetem Saugventil 12 mit einem vom Kolben 6 begrenzten Raum 23. Dabei ragt der Endabschnitt 19 des Ventilsitzkörpers 13 in den Raum 23. Das dem Kolben 6 zugewandte Ende des Endabschnitts 19 des Ventilsitzkörpers 13 ist nach außen gebogen, um einen auf dem Endabschnitt 19 aufgesetzten Haltering 24 aufzunehmen. Eine Druckfeder 25 stützt sich einerseits an einer, am Haltering 24 ausgebildeten Stufe, und andererseits an einer, an einem Ventilelement 26 des Saugventils 12 ausgebildeten Stufe ab. Das Ventilelement 26 dient als Schließkörper des Saugventils 12 und wird durch die Druckfeder 25 gegen seinen Sitz, d. h. einer der dem Kolben 6 zugewandten Stirnseite des Ventilsitzkörpers 13, radial außerhalb des Endabschnitts 19, vorgespannt. In dieser Stellung des Saugventils 12 ist der Raum 23 nicht mit dem Niederdruckspeicher verbunden. Eine Stufe zwischen den Abschnitten 16 und 17 der Bohrung 14 bildet einen Ventilsitz für ein vorzugsweise als Kugel 27 ausgebildetes Ventilelement des Druckventils 11. Die Kugel 27 wird durch eine Druckfeder 28 gegen ihren Sitz vorgespannt, wobei sich das der Kugel 27 gegenüberliegende Ende der Druckfeder 28 von einem in der Bohrung 14 angeordnetem Stopfen 29 abstützt. Der Stopfen 29 weist zur Führung der Druckfeder 28 einen nach innen vorragenden Stiftteil 30 auf, dessen Außendurchmesser in etwa dem Innendurchmesser der Druckfeder 28 entspricht.

Während des Betriebs der Hydraulikpumpe 1 wird in einer Druckhubphase, in der sich der Pumpenkolben 6 gemäß der Ansicht der Fig. 1 nach rechts bewegt, der Druck von Bremsflüssigkeit in dem Raum 23 erhöht. Zu diesem Zweck ist um den Pumpenkolben 6 umfangsmäßig eine Dichtung 31 vorgesehen. Die unter Druck stehende Bremsflüssigkeit in dem Raum 23 drückt nun die Kugel 27 gegen die Vorspannung der Druckfeder 28 von ihrem Sitz weg, wodurch unter Druck stehende Bremsflüssigkeit zu einem Druckmittelverbraucher, zum Beispiel den Radbremsen, übertragen wird. In einer Saugphase, während der sich der Pumpenkolben 6 gemäß der Ansicht der Fig. 1 nach links bewegt, bleibt das Druckventil 11 geschlossen, d. h. die Kugel 27 wird durch die Wirkung der Druckfeder 28 gegen ihren an der Grenzfläche der Abschnitte 16 und 17 gebildeten Ventilsitz gedrückt. Während dieser Saughubphase wird durch die relative Druckerniedrigung der Bremsflüssigkeit im Druckraum 23 das Saugventils 12 geöffnet. Dann wird Druckmittel über den Niederdruckspeicher, die Bohrung 21, den Ringkanal 20 und die Bohrung 21 in den Druckraum 23 angesaugt.

In Fig. 2 ist eine Längsschnittsansicht eines ersten Ausführungsbeispiels der vorliegenden Erfindung gezeigt. Im Unterschied zu der, bereits in Zusammenhang mit Fig. 1 beschriebenen kolbenpumpe 1 weist das Ausführungsbeispiel gemäß Fig. 2 eine unterschiedliche Ausbildung der Patrone 8 auf. Das Saugventil 12 der Patrone 8 gemäß dem zweiten, in Fig. 2 dargestellten Ausführungsbeispiel der vorliegenden Erfindung ist ebenso wie das Druckventil 11 als Kugelventil ausgebildet, wobei die Anordnung des Saugventils 12 in der Patrone 8 in etwa senkrecht zu derjenigen des Druckventils 11 ist. Die Patrone 8 weist daher neben der für das Druckventil 11 vorgesehenen axialen Bohrung 14 eine gestufte Radialbohrung 32 auf. Eine als Ventilkörper dienende Kugel 33, die durch eine Druckfeder 34 gegen eine, in der Radialbohrung 32 ausgebildeten Stufe vorgespannt wird, ist der Schließkörper des Saugventils 12.

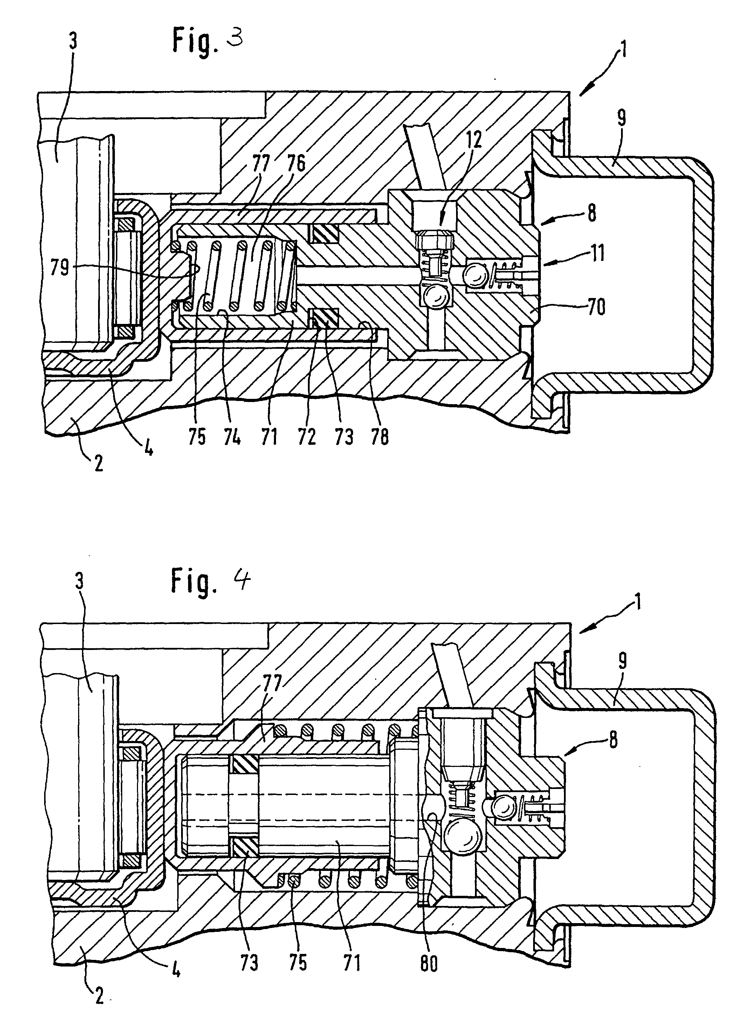

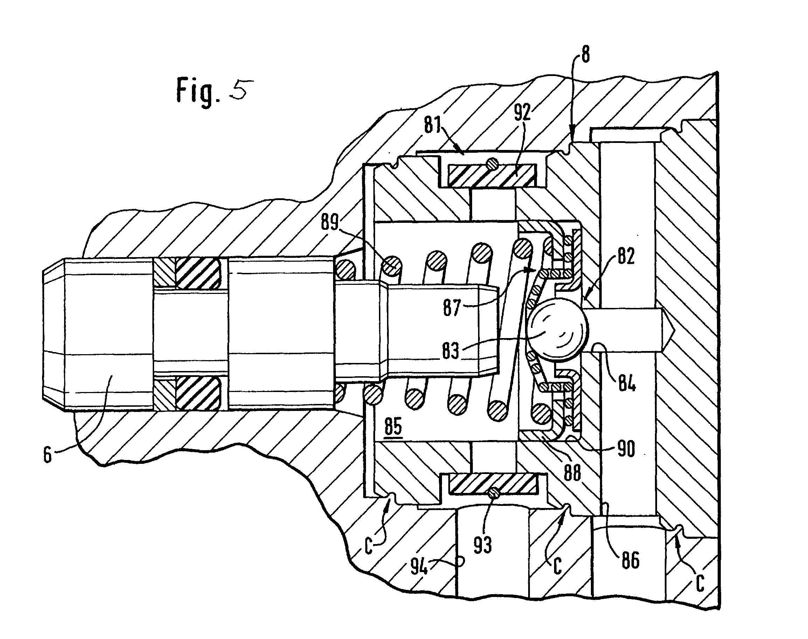

In Fig. 3 ist eine Längsschnittsansicht eines zweiten Ausführungsbeispiels der vorliegenden Erfindung dargestellt. Der Aufbau der Ventilpatrone 8 gemäß Fig. 3 ist im allgemeinen ähnlich dem Aufbau der Ventilpatrone 8 gemäß dem , in Zusammenhang mit Fig. 2 beschriebenen Ausführungsbeispiel. Dies gilt insbesondere insofern, daß die Patrone 8 an einem Endabschnitt ein axial ausgebildetes Druckventil 11 und ein radial dazu ausgebildetes Saugventil 12 aufweist. Im Unterschied zu dem Ausführungsbeispiel gemäß Fig. 2 weist die Patrone 8 einen Ventilsitzkörper 70 auf, der einen nach innen bzw. zu dem Exzenter 4 hin ausgebildeten Dorn 71, der vorzugsweise aus Stahl hergestellt ist, aufweist. Eine Umfangsnut 72 ist an dem Dorn 71 ausgebildet und dient zur Aufnahme eines Dichtrings 73. An der Stirnseite des Dorns 71 ist in Fig. 5 eine gestufte Bohrung 74 ausgebildet, die zur Aufnahme einer Druckfeder bzw. Kolbenrückstellfeder 75 dient und einen Raum 76 bildet. Der von dem Exzenter 4 angetriebene Pumpenkolben ist als Topfkolben 77 ausgebildet. Der Topfkolben 77 weist eine Bohrung 78 auf, dessen Innendurchmesser in etwa dem Außendurchmesser des Dorns 71 entspricht. An einem Bodenabschnitt der Bohrung 78 ist ein axialer Vorsprung 79 ausgebildet, dessen Außendurchmesser im wesentlichen dem Innendurchmesser der Druckfeder 75 entspricht. Der Außendurchmesser des Vorsprungs 79 verjüngt sich etwas nach außen, um den Einbau der Druckfeder 75 zu erleichtern. Der Topfkolben 77 ist vorzugsweise aus Stahl hergestellt und kann beispielsweise ein Fließpreßteil sein. Dadurch kann das Spiel zwischen dem Topfkolben 77 und dem Dorn 71 aufgrund des in etwa gleichen Ausdehnungskoeffizienten sehr gering gehalten werden. Ferner muß das Gehäuse 2 nicht mehr eloxiert oder gehärtet werden. Dabei wird eine Verunreinigung durch das Einclinchen bzw. Verstemmen der Ventile und Verschlüsse vermieden. Der Figur 5 entnimmt man, daß die Druckfeder 75 innerhalb des Topfkolbens 77, und genauer in einem aus dem Topfkolben 77 und dem Dorn 71 gebildeten Raum 76 angeordnet ist.

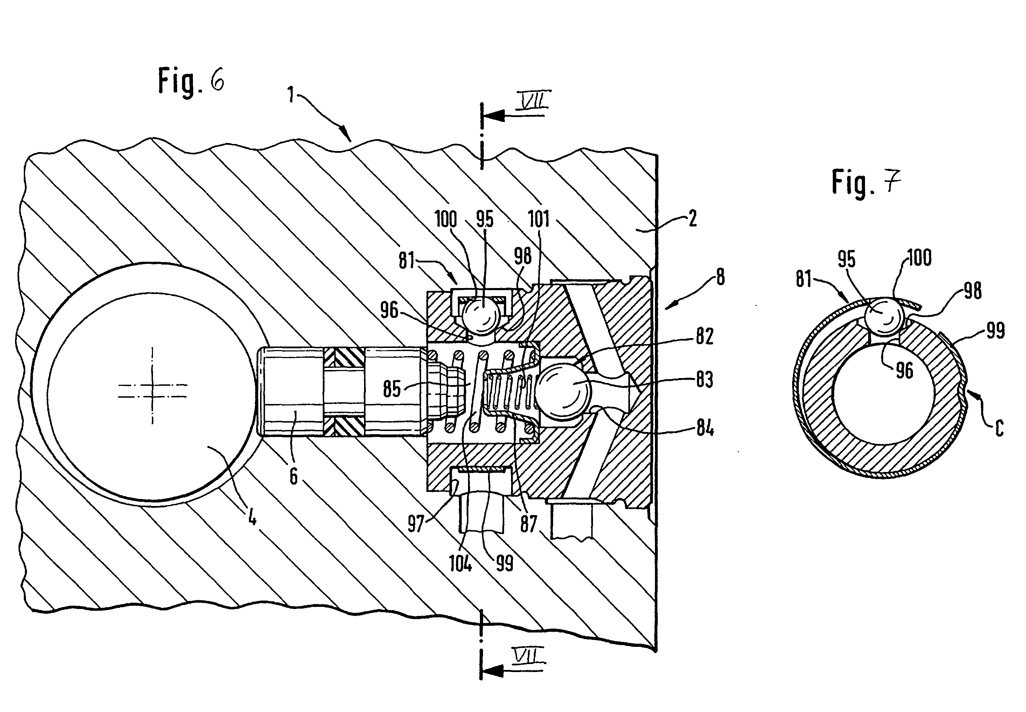

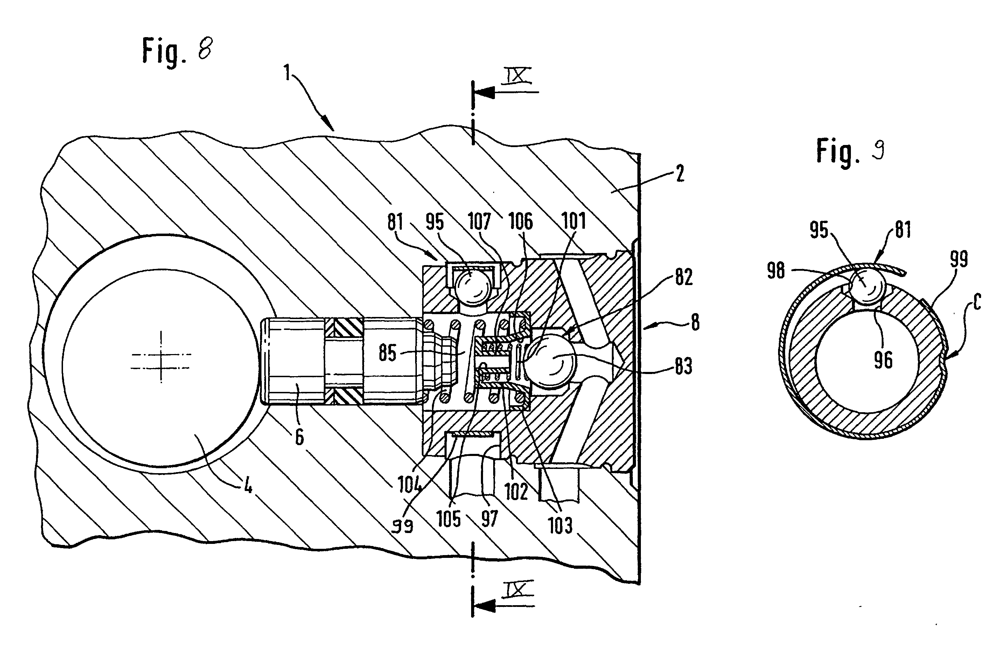

Bei dem in Fig. 4 dargestellten dritten Ausführungsbeispiel der vorliegenden Erfindung ist im Unterschied zu dem in Fig. 3 dargestellten Ausführungsbeispiel der vorliegenden Erfindung die Druckfeder 75, die zur Rückstellung des Topfkolbens 77 dient, an einer auf der Außenseite des Topfkolbens 77 ausgebildeten Stufe gelagert. Auf ihrer gegenüberliegenden Seite ist die Druckfeder 75 an einer, durch den Ansatz des Dorns 71 gebildeten Stufe des Ventilsitzkörpers 70 gelagert und geführt. Als Raum bzw. Kompressionsraum 76 bzw. dient bei dem Ausführungsbeispiel gemäß Fig. 6 unter anderem auch eine axiale Bohrung 80 in dem Dorn 71.

Es sei bemerkt, daß bei den in Fig. 3 und 4 dargestellten Ausführungsbeispielen der vorliegenden Erfindung im Gegensatz zu den in den Fig. 1 bis 2 dargestellten Ausführungsbeipielen, anstelle des Kuppelrings 5, die Druckfeder 75 zur Rückstellung des Topfkolbens 77 vorgesehen.

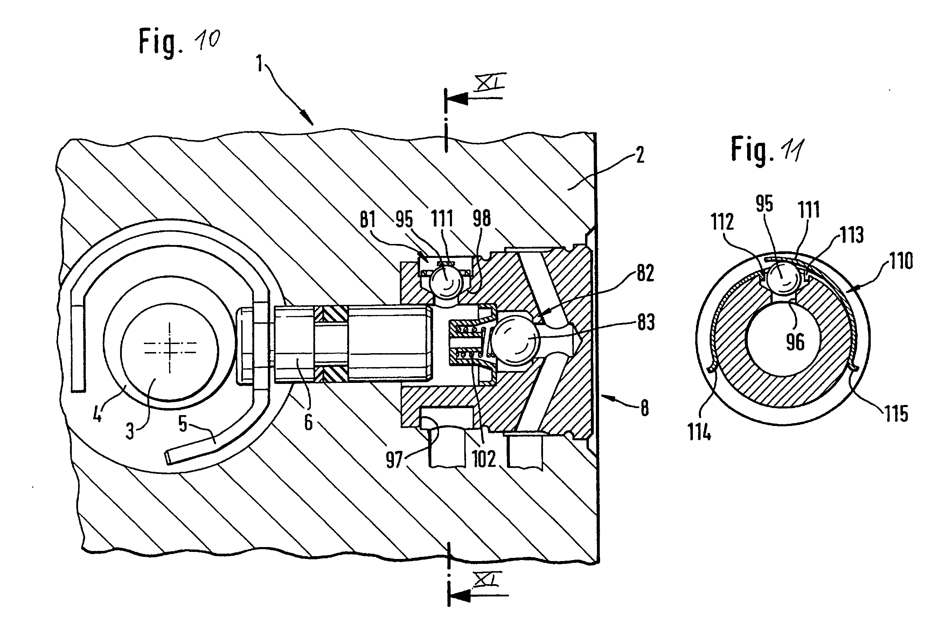

In Fig. 5 ist ein viertes Ausführungsbeispiel der vorliegenden Erfindung schematisch dargestellt. Die in Fig. 5 dargestellte Patrone 8 weist ein Druckventil 81 und ein Saugventil 82 auf. Das im Zentrum des Ventilsitzkörpers ausgebildete Saugventil 82 weist einen als Kugel 83 ausgebildeten Ventilkörper, der im geschlossenen Zustand des Saugventils 82 auf einem an einer Bohrung 84 ausgebildeten Ventilsitz aufliegt, auf. Der Ventilkörper kann anstelle der Kugel 83 auch eine Platte oder dergleichen sein. Es sei bemerkt, daß die in Fig. 5 dargestellte Patrone 8 im wesentlichen rotationssymmetrisch aufgebaut ist, was die Herstellung vereinfacht. Die Bohrung 84 ist an einer Stirnseite der Patrone 8 axial zentriert ausgebildet. Die Bohrung 84 verbindet den Druck- oder Kompressionsraum 85 mit einem Kanal 86, der zu einem (nicht dargestellten) Niederdruckspeicher führt. Die Kugel 84 wird von einem Haltekäfig 87 gehalten. Eine zwischen dem Pumpenkolben 6 und einem Haltering 88 vorgesehene Druckfeder 89, die sich im wesentlichen im Kompressionsraum 85 befindet, sorgt für die erforderliche Rückstellung des Pumpenkolbens 6 während des Betriebs. Gleichzeitig dient die Druckfeder 89 dazu, den Haltekäfig 87 über den Haltering 88 an den Boden der den Druckraum 85 bildenden Ausnehmung 90 in der Patrone 8 zu halten. Vorzugsweise ist der Haltering 88 aber auch in der Patrone bzw. dem Bauelement 8 eingepreßt. Während bei dem Ausbildungsbeispiel gemäß Fig. 5 das Saugventil axial an dem, dem Pumpenkolben 6 gegenüberliegendem Ende der Patrone 8 angeordnet ist, weist das Druckventil 81 als Schließkörper eine ringförmige Platte 92 auf, die beispielsweise ein aufgeschlitzter Ring aus Kunststoff sein kann. Die Platte 92 wird durch einen Drahtsprengring 93 gegen die Patrone 8 vorgespannt, so daß das Druckventil 81 im geschlossenen Zustand für eine Druckmitteldichtung zwischen dem Kompressionsraum 85 und dem zu einem Druckmittelverbraucher führenden Kanal 94 sorgt. Der Darstellung der Fig. 7 entnimmt man, daß der Ventilsitzkörper der Patrone 8 zum druckdichten Einbau in ein Pumpengehäuse mit drei, durch das Bezugszeichen C angezeigten, Clinchverbindungen bzw. Verstemmungen versehen ist. Es sei bemerkt, daß das in Fig. 7 dargestellte Ausführungsbeispiel der vorliegenden Erfindung dahingehend besonders vorteilhaft ist, daß der Ventilsitzkörper der Patrone 8 in seinem Inneren durch das Vorsehen des axial beispielsweise freigedrehten Kompressionsraums 85 besonders raum- und materialsparend ausgebildet ist.

In Zusammenhang mit den Fig. 6 und 7 wird ein fünftes Ausführungsbeispiel der vorliegenden Erfindung erläutert. Das in den Fig. 6 und 7 dargestellte, Ausführungsbeispiel der vorliegenden Erfindung ist im allgemeinen ähnlich dem, in Fig. 5 dargestellten, Ausführungsbeispiel der vorliegenden Erfindung, unterscheidet sich aber von diesem im wesentlichen dadurch, daß das Druckventil 81 eine abgewandelte Ausbildung besitzt. Das Druckventil 81 gemäß den Fig. 6 und 7 weist einen vorzugsweise als Kugel 95 ausgebildeten Ventilkörper auf, der in einer radialen Bohrung 96 in einem dem Pumpenkolben 6 zugewandten Abschnitt der Patrone 8 ausgebildet ist und aus einem geeigneten Werkstoff, vorzugsweise Stahl oder Kunststoff, besteht. Radial außerhalb der Bohrung 96 ist in der Patrone 8 eine Umfangsnut 97 ausgebildet, die an der Stelle der Bohrung 96 einen insbesondere konusförmigen Abschnitt 98 aufweist. Ein Haltebügel 99, der als Blattfeder wirkt, dient zur Vorspannung der Kugel 95 gegen ihren, durch den konusförmigen Abschnitt 98 gebildeten Ventilsitz. Die Verwendung einer Blattfeder für das Druckventil 81 ist deshalb möglich, weil der Öffnungsdruck des Druckventils 81 nicht so exakt eingestellt werden muß, wie derjenige des Saugventils 82. Es wird daher keine Schraubenfeder für das Druckventil 81 benötigt. Zudem ist der Öffnungsdruck des Druckventils nicht so entscheidend wie derjenige des Saugventils, weshalb der wirksame Dichtsitzdurchmesser kleiner sein kann. Man entnimmt insbesondere der Darstellung der Fig. 7, daß der Haltebügel 99, der sich im wesentlichen beinahe um den ganzen Umfang der Patrone 8 erstreckt, an der Stelle der Kugel 95 eine Lochung 100 aufweist. Die Lochung 100 dient zur Fixierung der Kugel 95 auf dem Ventilsitz, so daß nach erfolgter Montage die Kugel 95 nicht aus der Patroneneinheit herausrutschen kann. Der Haltebügel 99 ist an der Patrone 8 formschlüssig und/oder reib- und kraftschlüssig fixiert, wie beispielsweise durch die in Fig. 7 dargestellte Verstemmung C, um eine Verdrehung des Bügels 99 zu verhindern. Es sei bemerkt, daß gemäß der Darstellung der Fig. 6 der Querschnitt der Bohrung 84 größer als derjenige der Bohrung 96 ist, was dadurch bedingt ist, daß für das Saugventil 82 beim Ansaugen der Bremsflüssigkeit wenig Drosselung und somit ein größerer wirksamer Saugquerschnitt wünschenswert ist. Im Unterschied zu dem, in Zusammenhang mit Fig. 5 beschriebenen Ausführungsbeispiel weist das in Fig. 6 dargestellte, Ausführungsbeispiel der vorliegenden Erfindung zwischen dem, vorzugsweise aus einem Metallblech hergestellten, Haltekäfig 87, der auch als Federtopf bezeichnet werden kann, und der Kugel 83 des Saugventils 82 eine Druckfeder 101 auf. Dadurch dann der Öffnungsdruck des Saugventils 82 exakt, d.h. ohne große Toleranzen, eingestellt werden. Der Haltekäfig 87 dient -entlang seinem Innenumfang- ebenfalls zur Führung der Druckfeder 101. Der Haltekäfig 87 wird vorzugsweise zusammen mit der in dem Haltekäfig 87 reibschlüssig gehaltenen Druckfeder 101 in das Ventilgehäuse auf Anschlag eingepreßt. Das Festsetzen des Haltekäfigs 87 kann alternativ auch durch eine oder mehrere in dem Ventilgehäuse bzw. der Patrone 8 befindliche Hinterschneidungen und am Haltekäfig 87 ausgebildete Schnapper erfolgen, die in die Hinterschneidungen eingreifen (nicht dargestellt). Nach der Montage des Saugventils 82 dient der Haltekäfig 87 -entlang seinem Außenumfang- ebenfalls zur Führung der Kolbenrückstellfeder 104. Um sicherzustellen, daß die Druckfeder 101 den Haltekäfig 87 nicht herausdrücken kann, weist die Kolbenrückstellfeder 104 eine stärkere Federkraft als die Druckfeder 101 auf. Es sei bemerkt, daß bei dem achten Ausführungsbeispiel der vorliegenden Erfindung die verschiedenen Druckräume mittels einer Clinch-Verbindung bzw. einer "tannenzapfenartigen" Verbindung erfolgt. Es werden daher keine gesonderten Abdichtelemente benötigt.

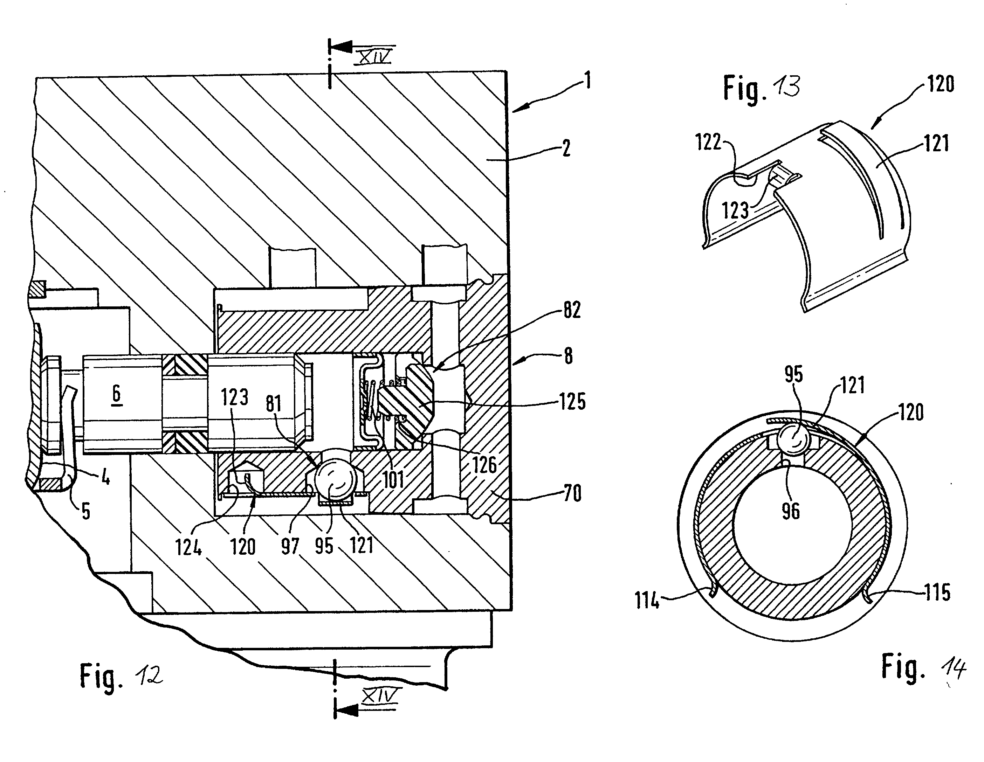

In den Fig. 8 und 9 ist schematisch ein sechstes Ausführungsbeispiel der vorliegenden Erfingung dargestellt. Im Unterschied zu dem, in Zusammenhang mit den Figuren 6 und 7 erläuterten, Ausführungsbeispiel der vorliegenden Erfindung besitzt der Haltebügel 99 gemäß dem sechsten Ausführungsbeispiel keine Lochung mehr. Dies ist deshalb vorteilhaft, weil dadurch eine mögliche Schieflage der Kugel 95 nicht mehr möglich ist. Die Kugel 95 wird durch die Verwendung des Haltebügels 99 gemäß Fig. 8 immer senkrecht auf den an der Bohrung 96 gebildeten Ventilsitz gedrückt. Ein vorzugsweise rotationssymmetrisch aufgebauter Federtopf 102 ist in dem Kompressionsraum 85 angeordnet und weist einen ringförmigen, umgebogenen Endabschnitt 103 auf, der zur Lagerung einer Seite der Kolbenrückstellfeder 104 dient. Auf ihrer anderen Seite liegt die Kolbenrückstellfeder 104 am Pumpenkolben 6 an. Um eine Strömungsmittelverbindung zwischen dem Kompressionsraum 85 und dem Saugventil 82 sicherzustellen, besitzt der Federtopf 102 eine zentrale, axiale Bohrung 105. Vorzugsweise ist am Umfang des Federtopfes 102 eine weitere Strömungsmittelverbindung vorgesehen, wobei am Umfang in nicht dargestellter Weise Stege ausgebildet sind, zwischen denen das Druckmittel hindurchströmen kann. Ferner weist der Federtopf 102 auf der dem Saugventil 82 zugewandten Seite eine ringförmige Ausnehmung 106 auf, die zur Lagerung einer Seite der Druckfeder 101 des Saugventils 82 dient. Ein zur Seite des Saugventils 82 vorstehender Abschnitt 107, in dem die Bohrung 105 ausgebildet ist, und dessen Außenseite der Innenseite der Ausnehmung 106 entspricht, dient auch als Anschlag für den Saugventilkörper, d. h. für die Kugel 83. Es sei bemerkt, daß der in Figur 10 dargestellte Federtopf 102 aus Kunststoff hergestellt ist, wodurch sich eine wesentlich vereinfachte Herstellung verglichen mit dem aus Blech hergestellten Haltekäfig 87 gemäß dem in Figur 8 dargestellten Ausführungsbeispiel ergibt. Die Kugel 83 kann sich auf Grund des Abschnitts 107 des Federtopfs 102 nicht im ansonsten konisch ausgebildeten Federtopf 102 festklemmen.

In den Figuren 10 und 11 ist ein Siebtes Ausführungsbeispiel der vorliegenden Erfindung dargestellt. Insbesondere unter-scheidet sich das, in den Figuren 10 und 11 dargestellte, Ausführungsbeispiel der vorliegenden Erfindung von den Fig. 6-9 bezüglich des Aufbaus des Druckventils 81. Als Federmittel zum Andrücken der Kugel 95 gegen den Ventilsitz des Druckventils 81 ist ein, zu einer Klammer 110 gebogenes Blechband vorgesehen. Aus der Klammer 110 ist in etwa mittig eine erfindungsgemäße Zunge 111 herausgearbeitet. Mittels der Zunge 111 wird die Kugel 95 mit einer definierten Kraft gegen ihren Ventilsitz gedrückt. Um ein Verdrehen der Klammer 110 zu vermeiden, weist die Klammer 110 hier zwei eingedrückte Bundabschnitte oder Laschen 112, 113 auf, die in die Nut 97 eingreifen. Dadurch wird die Klammer 110 auf dem Ventilsitzkörper fixiert. Ferner weist die Klammer 110 an ihren beiden Querseiten umgebogene Enden 114, 115 auf, welche die Montage der Klammer 110, d. h. das Aufstecken der Klammer 110 auf den Ventilsitzkörper, erleichtern.

In Zusammenhang mit den Figuren 12 bis 14 wird im folgenden ein achtes Ausführungsbeispiel der vorliegenden Erfindung beschrieben, wobei die Fig. 14 einen Schnitt durch Fig. 12 entlang der Linie XIV-XIV darstellt. Im Unterschied zu dem, in den Figuren 10 und 11 dargestellten, Ausführungsbeispiel der vorliegenden Erfindung ist die Klammer 120 wesentlich verbreitert worden, sie erstreckt sich daher auf der Außenseite der Patrone 8 über die Nut 97 in Richtung des Exzenters 4 hinaus. Durch die Verbreiterung an der Klammer 120 wird die Klammer 120 alleine durch ihre Federkraft auf der Patrone 8 gehalten. Es sind daher keine weiteren Maßnahmen, wie z. B. durch Schweißen oder Verstemmen, erforderlich, um die Klammer 120 auf der Patrone 8 zu befestigen. Die Kugel 95 wird erfindungsgemäß durch eine in der Klammer 120 ausgebildete Zunge 121 gegen ihren Ventilsitz gedrückt. Es sei bemerkt, daß sich die Zunge 121 fast über die halbe Länge der Klammer 120 erstreckt. Eine in einer Ausnehmung 122 an der Stirnseite der Klammer 120 ausgebildete Lasche 123 dient zur Fixierung der Klammer 120 auf der Patrone 8. Es sei bemerkt daß im Gegensatz zu dem Ausführungsbeispiel gemäß Fig. 10-11 die Fixierung bei dem in den Figuren 14 bis 16 dargestellten, elften Ausführungsbeispiel der Klammer 120 auf der Patrone 8 im wesentlichen senkrecht zu der Federwirkung der Halteklammer 120 ist. Dadurch ist eine Verdrehung der Klammer 120 auf der Patrone 8 in hohem Maße ausgeschlossen. Ferner ist erfindungsgemäß auch die Vorspannkraft der Zunge 121 auf die Kugel 95 genauer bestimmbar. Eine in der Patrone 8 ausgebildete Bohrung 124 ist vorgesehen, damit die Lasche 123 darin eingesteckt werden kann und ein Verrutschen bzw. Verdrehen der Klammer 121 vermieden wird. Insbesondere der Darstellung der Figuren 13 und 14 kann man entnehmen, daß sich die Klammer 120 über die Hälfte des Umfangs der Patrone 8, und vorzugsweise etwa über zwei Drittel des Umfangs der Patrone 8 erstreckt. Schließlich sei bemerkt, daß der Saugventilkörper 125 in dem Ausführungsbeispiel der Erfindung gemäß Fig. 12 hammerformig und auf seiner als Schließkörper dienenden Stirnseite im wesentlichen konisch oder in Form einer Kugelkalotte ausgebildet ist, wobei der Ventilsitz dann ebenfalls konisch oder kalottenförmig geformt ist. Auf seiner gegenüberliegenden Stirnseite weist der hammerförmige Ventilkörper 125 vorzugsweise eine Ringnut 126 zur Aufnahme und Führung der als Saugventilfeder dienenden Druckfeder 101 auf.

### Bezugszeichenliste

- 1: Hydraulik- bzw. Kolbenpumpe
- 2: Gehäuse
- 3: Antriebswelle
- 4: Exzenter
- 5: Kuppelring
- 6: Pumpenkolben
- 7: Bohrung
- 8: Patrone oder Bauelement
- 9: Deckel
- 10: Druckdämpfungskammer
- 11: Druckventil
- 12: Saugventil
- 13: Ventilsitzkörper
- 14: Bohrung
- 15: Abschnitt
- 16: Abschnitt
- 17: Abschnitt
- 18: Endabschnitt
- 19: Endabschnitt
- 20: Ringkanal
- 21: Bohrung
- 22: Bohrung
- 23: Raum
- 24: Haltering
- 25: Druckfeder
- 26: Ventilelement
- 27: Ventilelement bzw. Kugel
- 28: Druckfeder
- 29: Stopfen
- 30: Stiftteil
- 31: Dichtung
- 32: Radialbohrung
- 33: Ventilkörper bzw. Kugel
- 34: Druckfeder
- 41: Druckventil
- 42: Saugventil
- 43: Ventilstößel
- 44: Zugfeder
- 45: Bohrung
- 46: Ventilsitzkörper
- 47: Halteelement
- 48: Schließkörper
- 53: Ventilstößel
- 54: Stiftabschnitt
- 55: Endabschnitt
- 56: Endabschnitt
- 57: Bohrung
- 58: Halteplatte
- 59: Außenumfangsabschnitt
- 60: Druckfeder
- 61: Schließkörper
- 62: Bohrung
- 63: Stufe
- 64: Kammer
- 70: Ventilsitzkörper
- 71: Dorn
- 72: Umfangsnut
- 73: Dichtring
- 74: Bohrung
- 75: Druck- bzw. Kolbenrückstellfeder
- 76: Raum
- 77: Topfkolben
- 78: Bohrung
- 79: Vorsprung
- 80: Bohrung
- 81: Druckventil
- 82: Saugventil
- 83: Kugel oder Ventilkörper
- 84: Bohrung
- 85: Druck- oder Kompressionsraum
- 86: Kanal
- 87: Haltekäfig oder Federtopf
- 88: Haltering
- 89: Druckfeder
- 90: Ausnehmung
- 92: Platte
- 93: Drahtsprengring
- 94: Kanal
- 95: Kugel oder Ventilkörper
- 96: Bohrung
- 97: Umfangsnut
- 98: Abschnitt
- 99: Haltebügel
- 100: Lochung
- 101: Druckfeder
- 102: Federtopf
- 103: Endabschnitt
- 104: Kolbenrückstellfeder
- 105: Bohrung
- 106: Ausnehmung
- 107: Abschnitt
- 110: Klammer
- 111: Zunge
- 112: Bundabschnitt oder Lasche
- 113: Bundabschnitt oder Lasche
- 114: Endabschnitt
- 115: Endabschnitt
- 120: Klammer
- 121: Zunge
- 122: Ausnehmung
- 123: Lasche
- 124: Bohrung
- 125: Saugventilkörper
- 126: Ringnut
- M: Mittelachse
- C: Clinchverbindung bzw. Verstemmung

## Patentansprüche

1. Kolbenpumpe (1), insbesondere zur Druckmittelförderung in hydraulischen, schlupfgeregelten Bremsanlagen, mit einem Kolben (6), mit einem Saugventil (12;42;82) und mit einem Druckventil (11;41;81), wobei das Saugventil (12;42;82) und das Druckventil (11;41;81) an einem eigenständig handhabbaren Bauelement (8) ausgebildet sind, welches in einem Gehäuse (2) der Kolbenpumpe (1) befestigt ist, wobei ein Ventil (11;12;81;82) im wesentlichen axial und das andere Ventil (11;12;81;82) im wesentlichen radial zu einer Mittelachse (M) des Bauelementes (8) angeordnet ist.

2. Kolbenpumpe (1) nach Anspruch 1, **dadurch gekennzeichnet, daß** das Bauelement (8) in dem Gehäuse (2) der Kolbenpumpe (1) durch Verstemmung oder Verclinchung (C) befestigt ist.

3. Kolbenpumpe (1) nach Anspruch 1 bis 2, **dadurch gekennzeichnet, daß** das Bauelement (8) einen Ventilsitzkörper (13;46;70) aufweist, in dem ein Ventilsitz für das Druckventil (11;41;81) und ein Ventilsitz für das Saugventil (12;42;82) ausgebildet ist.

4. Kolbenpumpe (1) nach einem der vorhergehenden Ansprüche, **dadurch gekennzeichnet, daß** der Pumpenkolben (6) als Topfkolben (77) ausgebildet ist, wobei das Bauelement (8) einen axial vorspringenden Dornabschnitt (71) aufweist, der in dem Topfkolben (77) geführt ist.

5. Kolbenpumpe (1) nach einem der Ansprüche 1 bis 4, **dadurch gekennzeichnet, daß** das Bauelement (8) einen Ventilsitzkörper (46;70) mit einer an dessen einer Stirnseite ausgebildeten, axialen Ausnehmung aufweist, in welcher der Pumpenkolben (6;77) geführt ist.

6. Kolbenpumpe (1) nach Anspruch 5, **dadurch gekennzeichnet, daß** das Saugventil (82) auf einer gegenüberliegenden Stirnseite des Ventilsitzkörpers (46;70) im wesentlichen koaxial zur Mittelachse (M) des Ventilsitzkörpers (46;70) angeordnet ist.

7. Kolbenpumpe (1) nach Anspruch 5 oder 6, **dadurch gekennzeichnet, daß** das Druckventil (81) im wesentlichen radial zur Mittelachse (M) des Ventilsitzkörpers (46;70) angeordnet ist.

8. Kolbenpumpe (1) nach einem der vorhergehenden Ansprüche, **dadurch gekennzeichnet, daß** das Saugventil (82) eine Druckfeder (106) aufweist, die mit einem Federtopf (102) gesichert ist, wobei der Federtopf (102) einen daran ausgebildeten Anschlag für den Ventilkörper (83) des Saugventils (82) aufweist, und wobei der Federtopf (102) ferner Mittel zur Führung der Druckfeder (106) und Mittel zur Führung einer Kolbenrückstellfeder (104) aufweist.

9. Kolbenpumpe (1) nach Anspruch 8, **dadurch gekennzeichnet, daß** die Mittel zur Führung der Druckfeder (106) und Mittel zur Führung der Kolbenrückstellfeder (104) ein topfartiger Abschnitt des Federtopfs (102) sind, wobei an der Innenseite des topfartigen Abschnitts die Druckfeder (106) und an der Außenseite des topfartigen Abschnitts die Kolbenrückstellfeder (104) geführt ist.

10. Kolbenpumpe (1) nach einem der vorhergehenden Ansprüche, mit einem Druckventil (81), wobei ein Ventilkörper (95) des Druckventils (81) durch ein an dem Ventilsitzkörper (46;70) befestigbares Klammerelement (99;110;120) gegen einen im Ventilsitzkörper (46;70) ausgebildeten Ventilsitz vorgespannt ist, **dadurch gekennzeichnet, daß** das Klammerelement (99;110;120) eine daran ausgebildete Zunge (111:121) aufweist, die den Ventilkörper (95) gegen den Ventilsitz vorspannt.

11. Kolbenpumpe (1)nach Anspruch 10, **dadurch gekennzeichnet, daß** das Klammerelement (99;110;120) eine, zu der Zunge (111;121) im wesentlichen senkrecht ausgebildete Lasche (123) zur Befestigung des Klammerelements (99;110;120) an dem Ventilsitzkörper (46;70) aufweist.

12. Kolbenpumpe (1) nach Anspruch 10, **dadurch gekennzeichnet, daß** das Klammerelement (99;110;120) wenigstens eine parallel zu der Zunge (111;121) ausgebildete Lasche (112,113) zur Befestigung des Klammerelements (99;110;120) in einer, zur Aufnahme des Ventilkörpers (95) dienenden Ausnehmung in dem Ventilsitzkörper (46;70) aufweist.

13. Kolbenpumpe (1) nach einem der Ansprüche 10 bis 12, **dadurch gekennzeichnet, daß** das Klammerelement (99;110;120) durch Verstemmung (C) an dem Ventilsitzkörper (46;70) befestigt ist.

14. Kolbenpumpe (1) nach einem der Ansprüche 10 bis 13, **dadurch gekennzeichnet, daß** das Klammerelement (99;110;120) wesentlich breiter als der Ventilkörper (95) ausgebildet ist.

15. Kolbenpumpe (1) nach einem der Ansprüche 10 bis 14, **dadurch gekennzeichnet, daß** das Klammerelement (99;110;120) an seinen Querseiten nach außen gewölbte Endabschnitte (114,115) aufweist.

## Claims

1. Piston pump (1), in particular for pressure medium delivery in slip-controlled hydraulic brake systems, including a piston (6), a suction valve (12;42;82) and a pressure valve (11;41;81), wherein the suction valve (12;42;82) and the pressure valve (11;41;81) are provided on a component (8) which can be handled independently, said component being fastened within a housing (2) of the piston pump (1), wherein a valve (11;12;81;82) is arranged generally in an axial direction and the other valve (11;12;81;82) is arranged generally in a radial direction relative to the centre line (M) of the component (8).

2. Piston pump (1) as claimed in claim 1,
**characterized in that** the component (8) is fastened within the housing (2) of the piston pump (1) by caulking or clinching (C).

3. Piston pump (1) as claimed in claims 1 to 2,
**characterized in that** the component (8) includes a valve seat member (13;46;70) wherein there is provided a valve seat for the pressure valve (11;41;81) and a valve seat for the suction valve (12;42;82).

4. Piston pump (1) as claimed in anyone of the preceding claims,
**characterized in that** the pump piston (6) is designed as a cup-shaped piston (77), with the component (8) including an axially projecting bolt portion (71) guided within the cup-shaped piston (77).

5. Piston pump (1) as claimed in anyone of claims 1 to 4,
**characterized in that** the component (8) includes a valve seat member (46;70) with an axial recess formed on one of the front sides thereof wherein the pump piston (6;77) is guided.

6. Piston pump (1) as claimed in claim 5,
**characterized in that,** on the opposite front side of the valve seat member (46;70), the suction valve (82) is arranged essentially coaxially to the centre line (M) of the valve seat member (46;70).

7. Piston pump (1) as claimed in claim 5 or claim 6,
**characterized in that** the pressure valve (81) is arranged essentially in a radial direction to the centre line (M) of the valve seat member (46;70).

8. Piston pump (1) as claimed in anyone of the preceding claims,
**characterized in that** the suction valve (82) includes a compression spring (106) secured by a bowl-type spring retainer (102), with said bowl-type spring retainer (102) including a stop shaped thereon and provided for the valve body (83) of the suction valve (82), and with said bowl-type spring retainer (102) further including means for guiding the compression spring (106) and means for guiding a piston return spring (104).

9. Piston pump (1) as claimed in claim 8,
**characterized in that** the means for guiding the compression spring (106) and the means for guiding the piston return spring (104) are a cup-shaped portion of the bowl-type spring retainer (102), with said compression spring (106) being guided on the inside of the cup-shaped portion and said piston return spring (104) being guided on the outside of the cup-shaped portion.

10. Piston pump (1) as claimed in anyone of the preceding claims, including a pressure valve (81), with a valve body (95) of the pressure valve (81) being preloaded by a clamping element (99;110;120), mountable to the valve seat member (46;70), against a valve seat formed within the valve seat member (46;70),
**characterized in that** the clamping element (99;110;120) includes a tongue (111;121) formed thereon which preloads the valve body (95) against the valve seat.

11. Piston pump (1) as claimed in claim 10,
**characterized in that** the clamping element (99;110;120) includes a tab (123), provided essentially perpendicularly to the tongue (111;121), for fastening the clamping element (99;110;120) on the valve seat member (46;70).

12. Piston pump (1) as claimed in claim 10,
**characterized in that** the clamping element (99;110;120) includes at least one tab (112,113), provided parallel to the tongue (111;121), for fastening the clamping element (99;110;120) in a recess in the valve seat member (46;70), serving to receive the valve body (95).

13. Piston pump (1) as claimed in anyone of claims 10 to 12,
**characterized in that** the clamping element (99;110;120) is fastened on the valve seat member (46;70) by means of caulking (C).

14. Piston pump (1) as claimed in anyone of claims 10 to 13,
**characterized in that** the clamping element (99;110:120) is designed considerably wider than the valve body (95).

15. Piston pump (1) as claimed in anyone of claims 10 to 14,
**characterized in that**, on its cross sides, the clamping element (99;110;120) includes end portions (114,115) arched outwards.

## Revendications

1. Pompe à piston (1), notamment pour le refoulement de fluides sous pression dans des dispositifs de freinage hydraulique à régulation du glissement, comprenant un piston (6), une valve d'aspiration (12 ; 42 ; 82) et une valve de refoulement (11 ; 41 ; 81), la valve d'aspiration (12 ;42 ;82) et la valve de refoulement (11 ; 41 ; 81) étant réalisées sur un élément structurel (8) qui peut être manipulé d'une manière indépendante et qui est fixé dans un boîtier (2) de la pompe à piston (1), l'une desdites valves (11 ; 12 ; 81 ; 82) étant disposée d'une manière essentiellement axiale vis-à-vis d'un axe central (M) de l'élément structurel (8), **caractérisée en ce que** l'autre valve (11 ; 12 ; 81 ; 82) est disposée d'une manière essentiellement radiale vis-à-vis de l'axe central (M) de l'élément structurel (8).

2. Pompe à piston (1) suivant la revendication 1, **caractérisée en ce que** l'élément structurel (8) est fixé dans le boîtier (2) de la pompe à piston (1) par matage ou aplatissement (C).

3. Pompe à piston (1) suivant la revendication 1 ou 2, **caractérisée en ce que** l'élément structurel (8) comprend un corps de siège de valve (13 ; 46 ; 70) dans lequel sont réalisés un siège de valve pour la valve de refoulement (11 ; 41 ; 81) et un siège de valve pour la valve d'aspiration (12 ; 42 ; 82).

4. Pompe à piston (1) suivant l'une des revendications précédentes, **caractérisée en ce que** le piston de pompe (6) est réalisé sous forme d'un piston en cuvette (77), l'élément structurel (8) comportant une partie en forme de broche (71) en saillie axiale qui est guidée dans le piston en cuvette (77).

5. Pompe à piston (1) suivant l'une des revendications 1 à 4, **caractérisée en ce que** l'élément structurel (8) comprend un corps de siège de valve (46 ; 70) comportant un évidement axial qui est réalisé sur une face frontale de celui-ci et dans lequel le piston de pompe (6 ; 77) est guidé.

6. Pompe à piston (1) suivant la revendication 5, **caractérisée en ce que** la valve d'aspiration (82) est disposée sur une face frontale opposée du corps de siège de valve (46 ; 70) d'une manière essentiellement coaxiale vis-à-vis de l'axe central (M) du corps de siège de valve (46 ; 70).

7. Pompe à piston (1) suivant la revendication 5 ou 6, **caractérisée en ce que** la valve de refoulement (81) est disposée d'une manière essentiellement radiale vis-à-vis de l'axe central (M) du corps de siège de valve (46 ; 70).

8. Pompe à piston (1) suivant l'une des revendications précédentes, **caractérisée en ce que** la valve d'aspiration (82) comprend un ressort de compression (106) qui est immobilisé par une coupelle de ressort (102), la coupelle de ressort (102) comportant, réalisée sur elle, une butée pour l'obturateur (83) de la valve d'aspiration (82), et la coupelle de ressort (102) comportant en outre des moyens pour guider le ressort de compression (106) et des moyens pour guider un ressort de rappel de piston (104).

9. Pompe à piston (1) suivant la revendication 8, **caractérisée en ce que** les moyens servant à guider le ressort de compression (106) et les moyens servant à guider le ressort de rappel de piston (104) sont constitués par une partie en forme de coupelle de la coupelle de ressort (102), le ressort de compression (106) étant guidé sur la face intérieure de la partie en forme de coupelle et le ressort de rappel de piston (104) étant guidé sur la face extérieure de la partie en forme de coupelle.

10. Pompe à piston (1) suivant l'une des revendications précédentes, comprenant une valve de refoulement (81), un obturateur (95) de la valve de refoulement (81) étant soumis par un élément formant pince (99 ; 110 ; 120), pouvant être fixé sur le corps de siège de valve (46 ; 70), à une précontrainte l'appliquant en appui sur un siège de valve réalisé dans le corps de siège de valve (46 ; 70), **caractérisée en ce que** l'élément formant pince (99 ; 110 ; 120) comporte, réalisée sur lui, une languette (111 ; 121) qui soumet l'obturateur (95) à une précontrainte l'appliquant en appui sur le siège de valve.

11. Pompe à piston (1) suivant la revendication 10, **caractérisée en ce que** l'élément formant pince (99 ; 110 ; 120) comporte une patte (123) qui est réalisée d'une manière essentiellement perpendiculaire vis-à-vis de la languette (111 ; 121) et qui sert à fixer l'élément formant pince (99 ; 110 ; 120) sur le corps de siège de valve (46 ; 70).

12. Pompe à piston (1) suivant la revendication 10, **caractérisée en ce que** l'élément formant pince (99 ; 110 ; 120) comporte au moins une patte (112, 113) qui est réalisée parallèlement à la languette (111 ; 121) et qui sert à fixer l'élément formant pince (99 ; 110 ; 120) dans un évidement ménagé dans le corps de siège de valve (46 ; 70) et servant à loger l'obturateur (95).

13. Pompe à piston (1) suivant l'une des revendications 10 à 12, **caractérisée en ce que** l'élément formant pince (99 ; 110 ; 120) est fixé au corps de siège de valve (46 ; 70) par matage (C).

14. Pompe à piston (1) suivant l'une des revendications 10 à 13, **caractérisée en ce que** l'élément formant pince (99 ; 110 ; 120) est réalisé essentiellement plus large que l'obturateur (95).

15. Pompe à piston (1) suivant l'une des revendications 10 à 14, **caractérisée en ce que** l'élément formant pince (99 ; 110 ; 120) comporte, sur ses côtés transversaux, des parties d'extrémité (114, 115) incurvées vers l'extérieur.
